# FASCICULE DE BREVET EUROPEEN

(11) **EP 4 187 071 B1**
(45) Date de publication et mention de la délivrance du brevet: **11.09.2024**
(21) Numéro de dépôt: 22209957.4
(22) Date de dépôt: 28.11.2022
(51) Int. Cl.: F02C 7/14, F02C 7/224, F02C 3/22, B64D 33/08, B64D 37/30, B64D 13/06

(54) **SYSTEME DE CHAUFFAGE DE DIHYDROGENE ET DE REFROIDISSEMENT DE FLUIDE COMBINES POUR AERONEF, ET AERONEF COMPRENANT UN TEL SYSTEME**
KOMBINIERTES SYSTEM ZUR ERWÄRMUNG VON WASSERSTOFF UND KÜHLUNG VON FLÜSSIGKEIT FÜR EIN FLUGZEUG UND FLUGZEUG MIT SOLCH EINEM SYSTEM
COMBINED DIHYDROGEN HEATING AND FLUID COOLING SYSTEM FOR AN AIRCRAFT, AND AIRCRAFT COMPRISING SUCH A SYSTEM

(30) Priorité: 29.11.2021 FR 2112637
(43) Date de publication de la demande: 31.05.2023
(73) Titulaire: Airbus SAS, 31700 Blagnac (FR); Airbus Operations (S.A.S.), 31060 Toulouse Cedex 9 (FR)
(72) Inventeur: DEVASIGAMANI, Nandakumar, 31060 TOULOUSE (FR); PAGET, Darren, 31060 TOULOUSE (FR); CARRETERO BENIGNOS, Jorge, 82024 TAUFKIRCHEN (DE)
(74) Mandataire: Cabinet Le Guen Maillet

(56) Documents cités:
- CN-C- 1 259 219
- US-A- 4 062 184
- US-A1- 2016 160 758
- ANONYMOUS: "Aircraft Gas Turbine Engine Lubrication System Components", AERONAUTICS GUIDE, 28 September 2020 (2020-09-28), pages 1 - 14, XP055929273, Retrieved from the Internet <URL:https://www.aircraftsystemstech.com/p/air-oil-coolers-two-basic-types-of-oil.html> [retrieved on 20220609]

## Description

### DOMAINE TECHNIQUE

La présente invention concerne le domaine des échanges thermiques et concerne notamment une installation, dans un aéronef, de chauffage et de refroidissement de fluides.

### ETAT DE LA TECHNIQUE ANTERIEURE

De plus en plus de développements portent sur des moteurs utilisant du dihydrogène comme combustible. C'est le cas notamment des moteurs de type turbopropulseur utilisés dans des aéronefs. Dans un tel aéronef, il est nécessaire de transporter le dihydrogène à l'état liquide pour des raisons d'encombrement puis de réchauffer le dihydrogène pour qu'il passe à l'état gazeux, à une température supérieure à 0°C, et puisse être utilisé comme combustible dans le moteur. Le document US4062184A divulgue un aéronef de l'art antérieur.

Le chauffage du dihydrogène est habituellement effectué au moyen d'un échange thermique avec une source de chaleur issue des gaz d'échappement de la turbine du moteur.

En outre, il serait intéressant d'utiliser le dihydrogène liquide comme source froide pour refroidir d'autres fluides de l'aéronef, tels que de l'huile ou encore de l'air, par exemple de l'huile de lubrification du moteur ou encore de l'air comprimé récupéré au niveau du moteur et utilisé pour l'air conditionné de la cabine de l'aéronef. Un échange thermique entre le dihydrogène liquide et les fluides permettrait ainsi à la fois de chauffer le dihydrogène et de refroidir les fluides de l'aéronef.

Pour cela, une solution envisagée par les inventeurs pourrait consister à utiliser un circuit commun comportant un fluide caloporteur permettant, au moyen d'échanges thermiques successifs, de récupérer la chaleur issue des gaz d'échappement, chauffer le dihydrogène, et refroidir les fluides de l'aéronef tels que l'huile et l'air comprimé.

Toutefois, une telle solution entraînerait un risque de gel des fluides de l'aéronef, et notamment de l'huile, en raison de la déperdition de chaleur subie par l'huile lors d'un échange thermique avec le fluide caloporteur, celui-ci ayant été refroidi par le dihydrogène liquide.

En outre, il existerait un risque que le fluide caloporteur lui-même gèle lors d'un échange thermique avec le dihydrogène liquide et/ou qu'il atteigne sa température d'ébullition au niveau d'embouts d'échangeurs thermiques. Cela peut générer un arrêt de circulation du fluide caloporteur entraînant un arrêt du chauffage du dihydrogène et du refroidissement des fluides de l'aéronef, ou encore un dysfonctionnement des échangeurs thermiques, entraînant une mauvaise fiabilité des échanges thermiques mis en oeuvre.

Il est alors souhaitable de pallier ces inconvénients.

Il est notamment souhaitable de fournir une solution fiable qui permette de refroidir des fluides de l'aéronef.

Il est en outre souhaitable de fournir une solution qui permette de réchauffer le dihydrogène liquide à une température suffisante pour être utilisé comme combustible dans le moteur de l'aéronef.

Il est de plus souhaitable de fournir une solution qui permette de maintenir les fluides de l'aéronef à des températures de fonctionnement, et notamment au-dessus des températures de solidification desdits fluides de l'aéronef.

### EXPOSE DE L'INVENTION

Un objet de la présente invention est de proposer un procédé de refroidissement et de chauffage combinés dans un aéronef, l' aéronef comportant un moteur configuré pour utiliser du dihydrogène comme combustible, le dihydrogène étant stocké sous forme liquide dans un réservoir et étant utilisé sous forme gazeuse dans le moteur, le moteur étant un turbopropulseur. Le dihydrogène est acheminé depuis le réservoir jusqu'au moteur par le biais d'une conduite dite conduite principale, et le procédé comporte les étapes de : mettre en dérivation, parallèlement à un tronçon prédéfini de la conduite principale, une partie du flux de dihydrogène dans une conduite dite conduite de dérivation ; mettre en circulation, dans un premier circuit fermé, un premier fluide caloporteur ; effectuer un premier échange thermique entre le premier fluide caloporteur et le dihydrogène circulant dans la conduite de dérivation ; et effectuer au moins un deuxième échange thermique, dit échange thermique secondaire, chaque échange thermique secondaire étant effectué entre le premier fluide caloporteur et un fluide utilisé dans l'aéronef et nécessitant d'être refroidi, dit fluide utile.

Ainsi, il est possible de refroidir de manière fiable un ou plusieurs fluides utiles d'un aéronef en utilisant le dihydrogène comme source froide.

Selon un mode de réalisation particulier, le procédé comporte en outre des étapes de : mettre en circulation, dans un second circuit fermé, un second fluide caloporteur ; effectuer un troisième échange thermique, entre le second fluide caloporteur et le dihydrogène circulant dans une partie de la conduite principale ; et effectuer un quatrième échange thermique entre le second fluide caloporteur et un gaz d'échappement issu d'une turbine du moteur.

Ainsi, il est possible de chauffer le dihydrogène liquide pour pouvoir l'utiliser comme combustible dans le moteur tout en refroidissant un fluide utile sans que le fluide utile ne risque de geler.

Selon un mode de réalisation particulier, le troisième échange thermique est effectué en aval du tronçon prédéfini de la conduite principale.

Selon un mode de réalisation particulier, le troisième échange thermique est effectué en amont du tronçon prédéfini de la conduite principale.

Ainsi, il est possible d'utiliser un premier fluide caloporteur ayant une plage de fonctionnement plus étroite : il n'est pas nécessaire d'utiliser un premier fluide caloporteur fonctionnant à des températures suffisamment basses pour supporter une déperdition de chaleur importante liée à une interaction avec de l'hydrogène liquide.

Selon un mode de réalisation particulier, le premier fluide caloporteur comporte une plage de température de fonctionnement plus étroite que la plage de température de fonctionnement du second fluide caloporteur.

Ainsi, les risques de gel du premier ou du second fluide caloporteur sont évités, ainsi que les risques d'ébullition du premier ou de second fluide caloporteur au niveau d'embouts d'échangeurs thermiques.

Selon un mode de réalisation particulier, le fluide utile est de l'huile ou de l'air comprimé issu du moteur et destiné à être utilisé dans un système de climatisation de l'aéronef.

Selon un mode de réalisation particulier, le procédé comporte un premier échange thermique secondaire entre le premier fluide caloporteur et un premier fluide utile et un deuxième échange thermique secondaire entre le premier fluide caloporteur et un deuxième fluide utile, le premier fluide utile étant de l'huile et le deuxième fluide utile étant de l'air comprimé issu du moteur et destiné à être utilisé dans un système de climatisation de l'aéronef.

Selon un mode de réalisation particulier, le procédé comporte en outre d'effectuer une régulation du flux de dihydrogène circulant dans la conduite de dérivation selon une température du fluide utile mesurée en sortie de l'échange thermique secondaire par lequel passe ledit fluide utile.

Ainsi, il est possible d'optimiser le refroidissement du fluide utile.

Selon un mode de réalisation particulier, le procédé comporte en outre d'effectuer une régulation du flux de dihydrogène circulant dans la conduite de dérivation selon une température du premier fluide caloporteur mesurée en entrée du premier échange thermique.

L'invention concerne également un système de refroidissement et de chauffage combinés dans un aéronef, l'aéronef comportant un moteur utilisant du dihydrogène comme combustible, le dihydrogène étant stocké sous forme liquide dans un réservoir et étant utilisé sous forme gazeuse dans le moteur, le moteur étant un turbopropulseur. Le dihydrogène est acheminé depuis le réservoir jusqu'au moteur par le biais d'une conduite dite conduite principale, et le système comporte :
- une conduite, dite conduite de dérivation, montée en dérivation par rapport à un tronçon prédéfini de la conduite principale,
- un premier circuit fermé prévu pour contenir un premier fluide caloporteur,
- un premier circulateur prévu pour mettre en circulation le premier fluide caloporteur dans le premier circuit fermé,
- un premier échangeur thermique installé de façon à permettre un premier échange thermique entre le premier fluide caloporteur et le dihydrogène circulant dans la conduite de dérivation, et
- un deuxième échangeur thermique installé de façon à permettre au moins un deuxième échange thermique, dit échange thermique secondaire, chaque échange thermique secondaire étant effectué entre le premier fluide caloporteur et un fluide utilisé dans l'aéronef et nécessitant d'être refroidi, dit fluide utile.

De façon particulière, le premier circulateur correspond à une pompe.

Selon un mode de réalisation particulier, le système comporte en outre :
- un second circuit fermé prévu pour contenir un second fluide caloporteur,
- un second circulateur prévu pour mettre en circulation le second fluide caloporteur dans le second circuit fermé,
- un troisième échangeur thermique installé de façon à permettre un troisième échange thermique entre le second fluide caloporteur et le dihydrogène circulant dans une partie de la conduite principale,
- un quatrième échangeur thermique installé de façon à permettre un quatrième échange thermique entre le second fluide caloporteur et un gaz d'échappement issu d'une turbine du moteur.

De façon particulière, le second circulateur correspond à une pompe.

L'invention concerne également un aéronef comportant au moins un tel système.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de chauffage et de refroidissement combinés destiné à mettre en oeuvre des échanges thermiques dans un aéronef, selon un premier exemple de réalisation ;
[Fig. 2] illustre schématiquement le système de chauffage et de refroidissement combinés selon un deuxième exemple de réalisation ;
[Fig. 3] illustre schématiquement le système de chauffage et de refroidissement combinés selon un troisième exemple de réalisation ;
[Fig. 4] illustre schématiquement un exemple d'architecture matérielle d'une unité de contrôle interne d'un contrôleur de flux du système de chauffage et de refroidissement combinés ; et
[Fig. 5] illustre un aéronef équipé d'un système de chauffage et de refroidissement combinés.

### EXPOSE DETAILLE DE MODES DE REALISATION

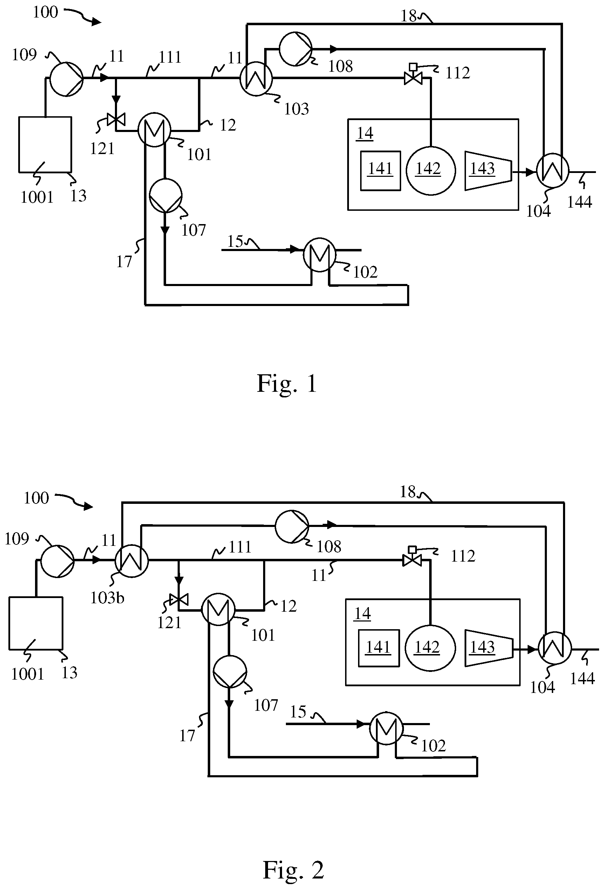

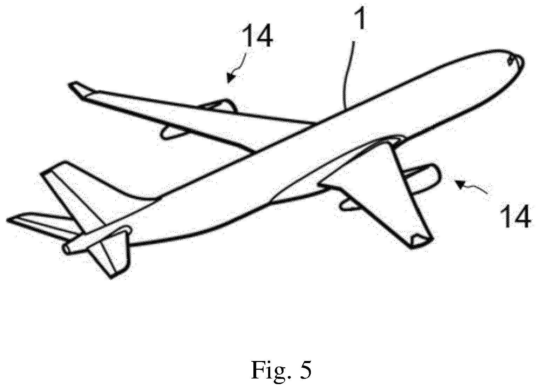

La **Fig. 1** illustre ainsi schématiquement un premier exemple de réalisation d'un système 100 de chauffage et de refroidissement combinés destiné à mettre en oeuvre des échanges thermiques dans un aéronef tel que l'aéronef 1 représenté sur la Fig. 5.

Le système 100 comporte un réservoir 13 stockant du dihydrogène 1001 sous forme liquide. La température du dihydrogène 1001 dans le réservoir 13 est par exemple de -253°C. Le système 100 comporte en outre une conduite, dite conduite principale 11 destinée à transporter le dihydrogène 1001 depuis le réservoir 13 jusqu'à une chambre de combustion 142 d'un moteur 14 de l'aéronef où il est utilisé comme carburant. Le dihydrogène 1001 est mis en circulation à l'aide d'un circulateur 109 tel qu'une pompe située sur la conduite principale 11 en sortie du réservoir 13. La conduite principale 11 comporte une valve de dosage de carburant 112, située en entrée de la chambre de combustion 142. La valve de dosage de carburant 112 permet d'inj ecter une quantité prédéfinie de dihydrogène 1001 dans la chambre de combustion 142.

Le moteur 14 est un turbopropulseur et comporte en outre un compresseur 141 destiné à comprimer de l'air entrant dans la chambre de combustion 142 ainsi qu'une turbine 143 située en sortie de la chambre de combustion 142.

Le système 100 comporte en outre une conduite, dite conduite de dérivation 12, distincte de la conduite principale 11 et située en dérivation par rapport à un tronçon prédéfini 111 de la conduite principale 11. La conduite de dérivation 12 est destinée à transporter, entre une entrée de la conduite de dérivation 12 et une sortie de la conduite de dérivation 12, une partie du flux du dihydrogène 1001 passant par la conduite principale 11 et issu du réservoir 13. L'autre partie dudit flux de dihydrogène 1001 passant par la conduite principale 11 est transportée parallèlement dans le tronçon prédéfini 111 de la conduite principale 11, entre l'entrée de la conduite de dérivation 12 et la sortie de la conduite de dérivation 12.

Optionnellement, le système 100 comporte en outre un contrôleur de flux 121 situé sur la conduite de dérivation 12. Le contrôleur de flux 121 est contrôlé par une unité de contrôle et permet de réguler le flux de dihydrogène 1001 passant par la conduite de dérivation 12.

Le système 100 comporte un premier circuit fermé 17, dans lequel un premier fluide caloporteur est mis en circulation dans un sens prédéfini, par exemple à l'aide d'un circulateur 107 tel qu'une pompe.

Le premier circuit fermé 17 comporte un premier échangeur thermique 101 et au moins un deuxième échangeur thermique 102, dit échangeur thermique secondaire.

Le système 100 comporte en outre un second circuit fermé 18, dans lequel un second fluide caloporteur est mis en circulation dans un sens prédéfini, par exemple à l'aide d'un circulateur 108 tel qu'une pompe. Le second circuit fermé 18 comporte un troisième échangeur thermique 103 et un quatrième échangeur thermique 104.

Chaque échangeur thermique 101, 102, 103, 104 permet d'effectuer un échange thermique entre deux fluides sans les mélanger, autrement dit de transférer de la chaleur d'un fluide vers l'autre fluide au travers d'une surface d'échange.

Le premier échangeur thermique 101 permet d'effectuer un premier échange thermique entre le premier fluide caloporteur et le dihydrogène 1001 passant par la conduite de dérivation 12. Le premier échange thermique entraîne un transfert de chaleur du premier fluide caloporteur vers le dihydrogène 1001 passant dans la conduite de dérivation 12 et permet ainsi de refroidir le premier fluide caloporteur et de réchauffer une partie du flux du dihydrogène 1001.

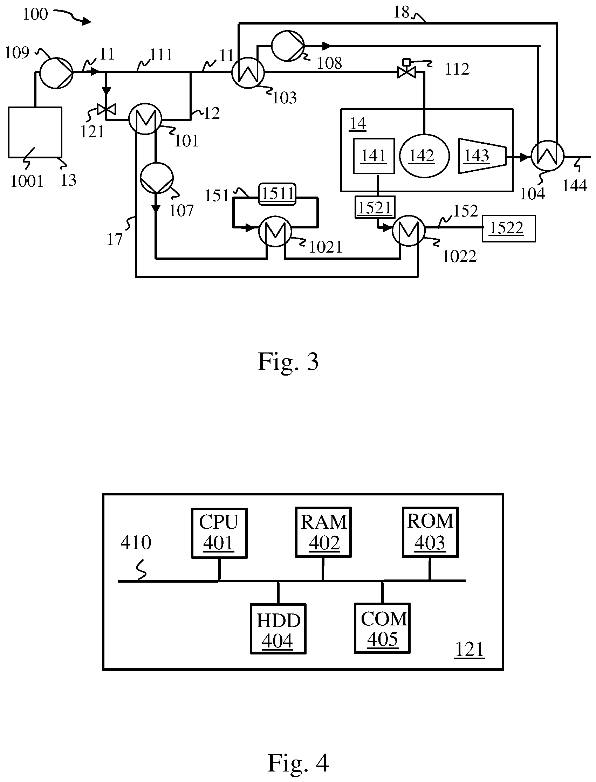

L'échangeur thermique secondaire 102 permet d'effectuer un deuxième échange thermique, dit échange thermique secondaire, entre le premier fluide caloporteur et un fluide utilisé dans l'aéronef et qui nécessite d'être refroidi, dit fluide utile. Le fluide utile est transporté dans une conduite 15 qui peut être un circuit fermé 151 (non représenté sur la Fig. 1 mais visible sur la Fig. 3) ou une conduite transportant le fluide utile d'une zone de récupération 1521 (non représentée sur la Fig. 1 mais visible sur la Fig. 3) vers une zone d'utilisation 1522 (non représentée sur la Fig. 1 mais visible sur la Fig. 3). Le fluide utile est par exemple de l'huile ou de l'air comprimé.

Le troisième échangeur thermique 103 permet d'effectuer un troisième échange thermique entre le second fluide caloporteur et le dihydrogène 1001 transporté par la conduite principale 11. Le troisième échange thermique entraîne un transfert de chaleur du second fluide caloporteur vers le dihydrogène 1001, et permet ainsi de refroidir le second fluide caloporteur et de réchauffer le dihydrogène 1001. Le troisième échange thermique entraîne un apport de chaleur au dihydrogène 1001 suffisant pour que le dihydrogène 1001, liquide en entrée du troisième échangeur thermique 103, se vaporise, et atteigne une température supérieure à 0°C de sorte à permettre une combustion stable dans la chambre de combustion 142. Le dihydrogène 1001 est ainsi à l'état gazeux en sortie du troisième échange thermique 103 et peut alors être utilisé comme combustible dans le moteur 14. Le dihydrogène 1001 est dans un état liquide dans la partie de la conduite principale 11 située entre le réservoir 13 et le troisième échangeur thermique 103 et dans un état gazeux dans la partie de la conduite principale 11 située entre le troisième échangeur thermique 103 et le moteur 14.

Selon le premier exemple de réalisation, le troisième échangeur thermique 103 est situé en aval du tronçon prédéfini 111 de la conduite principale 11. Un élément situé en aval d'une zone identifiée d'une conduite est situé du côté opposé de la zone identifiée par rapport à une source d'un fluide circulant dans ladite conduite. Un élément situé en amont d'une zone identifiée d'une conduite est situé du même côté de la zone identifiée que la source d'un fluide circulant dans ladite conduite. La source du dihydrogène 1001 circulant dans la conduite principale 11 et la conduite de dérivation 12 est le réservoir 13. Par exemple, le troisième échangeur thermique 103 est situé du côté du tronçon prédéfini 111 qui est opposé au réservoir 13. Le dihydrogène 1001 est alors dans un état liquide dans le tronçon prédéfini 111 et dans la conduite de dérivation 12. Le quatrième échangeur thermique 104 permet d'effectuer un quatrième échange thermique entre le second fluide caloporteur et un gaz d'échappement issu de la turbine 143 du moteur 14 et transporté dans une conduite de gaz d'échappement 144. Le quatrième échange thermique entraîne un transfert de chaleur du gaz d'échappement vers le second fluide caloporteur, et permet ainsi de réchauffer du second fluide caloporteur.

Le premier fluide caloporteur peut être par exemple de l'eau glycolée. L'eau glycolée comporte de l'eau et comporte une proportion d'éthylène glycol ou de propylène glycol et est utilisée comme fluide caloporteur à l'état liquide. La température de fonctionnement de l'eau glycolée est définie entre sa température de fusion et sa température d'ébullition qui varient selon la proportion d'éthylène glycol ou de propylène glycol. En particulier, plus la proportion d'éthylène glycol est élevée, plus la température de fusion de l'eau glycolée est basse. Alternativement, le premier fluide caloporteur peut être un gaz tel que du diazote ou de l'hélium. Le second fluide caloporteur peut être par exemple un gaz tel que du diazote ou de l'hélium.

En outre, le second fluide caloporteur doit fonctionner, d'une part, à des températures suffisamment basses pour supporter la déperdition de chaleur transmise au dihydrogène 1001 au niveau du troisième échangeur thermique 103 sans geler, autrement dit sans que la température de solidification du second fluide caloporteur soit atteinte. En effet, la température du dihydrogène 1001 passe, au niveau du troisième échangeur thermique 103, d'environ -253°C à une température supérieure à 0°C de sorte à permettre une combustion stable dans la chambre de combustion 142. D'autre part, le second fluide doit fonctionner à des températures suffisamment élevées pour supporter l'apport de chaleur reçu par le gaz d'échappement au niveau du quatrième échangeur thermique 104 sans atteindre la température d'ébullition du second fluide caloporteur.

Le premier fluide caloporteur comporte en revanche une plage de température de fonctionnement plus étroite que celle du second fluide caloporteur. Le premier fluide caloporteur doit pouvoir absorber une quantité de chaleur, au niveau de l'échangeur thermique secondaire 102, qui soit suffisante pour que le fluide utile refroidisse et suffisamment faible pour éviter que le fluide utile ne gèle, autrement dit pour éviter que la température de solidification du fluide utile soit atteinte.

Selon un mode de réalisation, le flux de dihydrogène 1001 passant par la conduite de dérivation 12 est régulé par le contrôleur de flux 121, sous contrôle de l'unité de contrôle, selon une température mesurée du fluide utile. La température mesurée du fluide utile est par exemple mesurée en sortie de l'échangeur thermique secondaire 102, autrement dit, mesurée après l'échangeur thermique secondaire dans le sens de circulation du fluide utile. Si la température mesurée du fluide utile augmente, l'unité de contrôle envoie une consigne d'augmentation du flux de dihydrogène 1001 au contrôleur de flux 121. L'augmentation du flux de dihydrogène 1001 passant par la conduite de dérivation 12 entraîne alors une amplification du refroidissement du premier fluide caloporteur, autrement dit, la quantité de chaleur transférée par le premier fluide caloporteur vers le dihydrogène 1001 au niveau du premier échangeur thermique 101 et par unité de volume de premier fluide caloporteur augmente. Par conséquent, le refroidissement du fluide utile est accru, autrement dit la quantité de chaleur transférée par le fluide utile vers le premier fluide caloporteur au niveau de l'échangeur thermique secondaire 102 augmente.

En revanche, si la température mesurée du fluide utile diminue, par exemple lorsque la température mesurée du fluide utile descend en-dessous d'un premier seuil prédéfini, l'unité de contrôle envoie une consigne de diminution du flux de dihydrogène 1001 au contrôleur de flux 121. La diminution du flux de dihydrogène 1001 passant par la conduite de dérivation 12 entraîne alors une diminution de la quantité de chaleur par unité de volume de premier fluide caloporteur transférée par le premier fluide caloporteur vers le dihydrogène 1001 au niveau du premier échangeur thermique 101. Par conséquent, le refroidissement du fluide utile est réduit, autrement dit la quantité de chaleur transférée par le fluide utile vers le premier fluide caloporteur au niveau de l'échangeur thermique secondaire 102 diminue. Ainsi, la régulation du flux de dihydrogène permet d'optimiser le refroidissement du fluide utile tout en évitant que le fluide utile gèle.

Le flux de dihydrogène 1001 passant par la conduite de dérivation 12 peut, en outre, ou alternativement, être régulé par le contrôleur de flux 121, sous contrôle de l'unité de contrôle, selon une température mesurée du premier fluide caloporteur. La température mesurée du premier fluide caloporteur est par exemple mesurée en entrée du premier échangeur thermique 101, autrement dit mesurée avant le premier échangeur thermique 101 dans le sens de circulation du premier fluide caloporteur. Lorsque la température mesurée du premier fluide caloporteur diminue, par exemple lorsque ladite température descend en-dessous d'un deuxième seuil prédéfini, l'unité de contrôle envoie une consigne de diminution du flux de de dihydrogène 1001 au contrôleur de flux 121. En raison de la diminution du flux de dihydrogène 1001 passant à travers la conduite de dérivation 12, la quantité de chaleur transférée par le premier fluide caloporteur vers le dihydrogène 1001 diminue. Ainsi, la température du premier fluide caloporteur en sortie du premier échangeur thermique reste au-dessus de la température de solidification du premier fluide caloporteur et le premier fluide caloporteur ne gèle pas.

La **Fig. 2** illustre schématiquement le système 100 de chauffage et de refroidissement combinés, selon un deuxième exemple de réalisation.

Le système 100 comporte le réservoir 13 stockant le dihydrogène 1001, la conduite principale 11 transportant le dihydrogène entre le réservoir 13 et la chambre de combustion 142 du moteur 14, et la conduite de dérivation 12. Le système comporte le premier circuit fermé 17, qui comporte le premier échangeur thermique 101 et le au moins un échangeur thermique secondaire 102. Le système 100 comporte en outre le second circuit fermé 18 comportant les troisième et quatrième échangeurs thermiques 103b et 104.

Selon le deuxième exemple de réalisation, le troisième échangeur thermique 103b est situé en amont du tronçon prédéfini 111 de la conduite principale 11, autrement dit situé du même côté du tronçon prédéfini 111 que le réservoir 13. Le dihydrogène 1001 est alors dans un état gazeux dans le tronçon prédéfini 111 et dans la conduite de dérivation 12.

Ainsi, le risque de gel du premier fluide caloporteur au niveau du premier échangeur thermique 101 est réduit par rapport au premier exemple de réalisation puisque la température du dihydrogène 1001 passant dans le premier échangeur thermique 101 est plus élevée.

Optionnellement, un cinquième échangeur thermique, non représenté, peut être ajouté à une intersection entre le second circuit fermé 18 et la conduite principale 11. Le cinquième échangeur thermique est situé, sur le second circuit fermé 18 et dans le sens de circulation du second fluide caloporteur, entre le quatrième échangeur thermique 104 et le troisième échangeur thermique 103b. Le cinquième échangeur thermique est situé, sur la conduite principale 11, en aval de la conduite de dérivation 12, autrement dit du côté opposé de la conduite de dérivation 12 par rapport au réservoir 13.

Ainsi, le dihydrogène liquide 1001 est d'abord partiellement chauffé au niveau du troisième échangeur thermique 103b, puis est partiellement transporté par la conduite de dérivation 12 où le premier échange thermique est effectué avec le premier fluide caloporteur, avec une température suffisamment élevée pour éviter le gel du premier fluide caloporteur. Le chauffage du dihydrogène 1001 est ensuite achevé dans le cinquième échangeur thermique, où le second fluide caloporteur est plus chaud que dans le troisième échangeur thermique 103b, afin d'être utilisé comme combustible.

La **Fig. 3** illustre schématiquement le système 100 de chauffage et de refroidissement combiné selon un troisième exemple de réalisation.

Le système 100 comporte le réservoir 13 stockant le dihydrogène 1001, la conduite principale 11 transportant le dihydrogène entre le réservoir 13 et la chambre de combustion 142 du moteur 14, et la conduite de dérivation 12. Le système 100 comporte en outre le second circuit fermé 18 comportant les troisième et quatrième échangeurs thermiques 103 et 104.

Dans le troisième exemple de réalisation, le système comporte le premier circuit fermé 17, qui comporte, successivement dans le sens de circulation du premier fluide caloporteur, le premier échangeur thermique 101, un premier échangeur thermique secondaire 1021 et un deuxième échangeur thermique secondaire 1022.

Similairement aux échangeurs thermiques 101, 102, 103, 104, chaque échangeur thermique 1021, 1022, permet d'effectuer un échange thermique entre deux fluides sans les mélanger, autrement dit de transférer de la chaleur d'un fluide vers l'autre fluide au travers d'une surface d'échange.

Le premier échangeur thermique 101 permet d'effectuer le premier échange thermique entre le premier fluide caloporteur et le dihydrogène 1001 passant par la conduite de dérivation 12.

Le premier échangeur thermique secondaire 1021 permet d'effectuer un premier échange thermique secondaire entre le premier fluide caloporteur et de l'huile circulant dans un circuit d'huile 151 fermé. Le premier échange thermique secondaire entraîne un transfert de chaleur de l'huile vers le premier fluide caloporteur et permet ainsi de refroidir l'huile. L'huile est transportée dans le circuit d'huile 151 entre une zone d'utilisation 1511, où l'huile est réchauffée, et le premier échangeur thermique secondaire 1021, où l'huile est refroidie.

Le deuxième échangeur thermique secondaire 1022 permet d' effectuer un deuxième échange thermique secondaire entre le premier fluide caloporteur et de l'air comprimé issu du compresseur 141 du moteur 14 et transporté par une conduite d'air comprimé 152. Le deuxième échange thermique secondaire entraîne un transfert de chaleur de l'air comprimé vers le premier fluide caloporteur et permet ainsi de refroidir l'air comprimé.

L'air comprimé est utilisé dans un système de climatisation de l'aéronef. L'air comprimé est comprimé et chauffé dans le compresseur 141 du moteur 14. Le flux de l'air comprimé est régulé en sortie du compresseur 141 par un système de vannes 1521 puis envoyé à travers le deuxième échangeur thermique secondaire 1022. En sortie du deuxième échangeur thermique secondaire 1022, l'air comprimé est transporté vers un système de climatisation 1522 où il est utilisé pour pressuriser et climatiser la cabine de l'aéronef.

Dans le troisième exemple de réalisation, la plage de température de fonctionnement du premier fluide caloporteur est suffisamment étroite pour pouvoir refroidir l'huile au niveau du premier échangeur thermique secondaire 1021 et refroidir l'air comprimé au niveau du deuxième échangeur thermique secondaire 1022 et pour éviter que l'huile gèle d'autre part, autrement dit que l'huile descende en-dessous de sa température de solidification.

Le flux de dihydrogène 1001 est régulé par le contrôleur de flux 121, sous contrôle de l'unité de contrôle, selon la température de l'huile mesurée en sortie du premier échangeur thermique secondaire 1021 et/ou la température de l'air comprimé mesurée en sortie du deuxième échangeur thermique secondaire 1022.

Par exemple, lorsque la température mesurée de l'huile augmente, l'unité de contrôle envoie une consigne d'augmentation du flux de dihydrogène 1001 au contrôleur de flux 121.

Lorsque la température mesurée de l'huile diminue, par exemple lorsque la température de l'huile décroît et passe au-dessous d'un troisième seuil prédéfini, l'unité de contrôle envoie une consigne de diminution du flux de dihydrogène 1001 au contrôleur de flux 121.

Lorsque la température mesurée de l'air comprimé augmente, l'unité de contrôle détermine si la température mesurée de l'huile est au-dessus du troisième seuil prédéfini. Si c'est le cas, l'unité de contrôle envoie une consigne d'augmentation du flux de dihydrogène 1001 au contrôleur de flux 121.

La **Fig. 4** illustre schématiquement un exemple d'architecture matérielle d'une unité de contrôle interne du contrôleur de flux 121. L'unité de contrôle interne au contrôleur de flux 121 comporte alors, reliés par un bus de communication 410 : un processeur ou CPU (« Central Processing Unit » en anglais) 401 ; une mémoire vive RAM (« Random Access Memory » en anglais) 402 ; une mémoire morte ROM (« Read Only Memory » en anglais) 403 ; une unité de stockage ou un lecteur de support de stockage, tel qu'un disque dur HDD (« Hard Disk Drive » en anglais) 404 ; et une interface de communication 405 permettant de communiquer avec des éléments tels que des capteurs de température.

Le processeur 401 est capable d'exécuter des instructions chargées dans la RAM 402 à partir de la ROM 403, d'une mémoire externe (non représentée), d'un support de stockage, ou d'un réseau de communication. Lorsque l'unité de contrôle est mise sous tension, le processeur 401 est capable de lire de la RAM 402 des instructions et de les exécuter. Ces instructions forment un programme d'ordinateur causant l'implémentation, par le processeur 401, de tout ou partie des actions décrites ici en relation avec l'unité de contrôle.

Ainsi, tout ou partie des actions décrites en relation avec l'unité de contrôle du contrôleur de flux 121 peut être implémenté sous forme logicielle par l'exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais). Selon une variante, l'unité de contrôle décrite ci-avant est extérieure au contrôleur de flux 121 et comprend des moyens de contrôle à distance du contrôleur de flux 121.

La **Fig. 5** illustre l'aéronef 1 équipé du système de chauffage et de refroidissement combinés.

## Revendications

1. Procédé de refroidissement et de chauffage combinés dans un aéronef (1), l'aéronef comportant un moteur (14) configuré pour utiliser du dihydrogène (1001) comme combustible, le dihydrogène (1001) étant stocké sous forme liquide dans un réservoir (13) et étant utilisé sous forme gazeuse dans le moteur (14), le moteur (14) étant un turbopropulseur, le dihydrogène (1001) étant acheminé depuis le réservoir (13) jusqu'au moteur (14) par le biais d'une conduite dite conduite principale (11), le procédé comportant en outre les étapes de :
- Mettre en dérivation, parallèlement à un tronçon prédéfini (111) de la conduite principale (11), une partie du flux de dihydrogène (1001) dans une conduite dite conduite de dérivation (12),
- Mettre en circulation, dans un premier circuit fermé (17), un premier fluide caloporteur,
- Effectuer un premier échange thermique entre le premier fluide caloporteur et le dihydrogène (1001) circulant dans la conduite de dérivation (12), le procédé étant **caractérisé en ce qu'**il comporte l'étape d' effectuer au moins un deuxième échange thermique, dit échange thermique secondaire, chaque échange thermique secondaire étant effectué entre le premier fluide caloporteur et un fluide utilisé dans l'aéronef et nécessitant d'être refroidi, dit fluide utile.

2. Procédé selon la revendication 1, comportant en outre des étapes de :
- Mettre en circulation, dans un second circuit fermé (18), un second fluide caloporteur,
- Effectuer un troisième échange thermique, entre le second fluide caloporteur et le dihydrogène (1001) circulant dans une partie de la conduite principale (11), et
- Effectuer un quatrième échange thermique entre le second fluide caloporteur et un gaz d'échappement issu d'une turbine (143) du moteur (14).

3. Procédé selon la revendication 2, dans lequel le troisième échange thermique est effectué en aval du tronçon prédéfini (111) de la conduite principale (11).

4. Procédé selon la revendication 2, dans lequel le troisième échange thermique est effectué en amont du tronçon prédéfini (111) de la conduite principale (11).

5. Procédé selon l'une des revendications 1 à 4, dans lequel le premier fluide caloporteur comporte une plage de température de fonctionnement plus étroite que la plage de température de fonctionnement du second fluide caloporteur.

6. Procédé selon l'une des revendications 1 à 5, dans lequel le fluide utile est de l'huile ou de l'air comprimé issu du moteur et destiné à être utilisé dans un système de climatisation de l'aéronef.

7. Procédé selon l'une des revendications 1 à 5, comportant un premier échange thermique secondaire entre le premier fluide caloporteur et un premier fluide utile et un deuxième échange thermique secondaire entre le premier fluide caloporteur un deuxième fluide utile, le premier fluide utile étant de l'huile et le deuxième fluide utile étant de l'air comprimé issu du moteur et destiné à être utilisé dans un système de climatisation de l'aéronef.

8. Procédé selon l'une des revendications 1 à 7, comportant en outre d'effectuer une régulation du flux de dihydrogène (1001) circulant dans la conduite de dérivation (12) selon une température du fluide utile mesurée en sortie de l'échange thermique secondaire par lequel passe ledit fluide utile.

9. Procédé selon l'une des revendications 1 à 8, comportant en outre d'effectuer une régulation du flux de dihydrogène (1001) circulant dans la conduite de dérivation (12) selon une température du premier fluide caloporteur mesurée en entrée du premier échange thermique.

10. Système (100) de refroidissement et de chauffage combinés dans un aéronef (1), l'aéronef comportant un moteur (14) utilisant du dihydrogène (1001) comme combustible, le dihydrogène (1001) étant stocké sous forme liquide dans un réservoir (13) et étant utilisé sous forme gazeuse dans le moteur (14), le moteur (14) étant un turbopropulseur, le dihydrogène (1001) étant acheminé depuis le réservoir (13) jusqu'au moteur (14) par le biais d'une conduite dite conduite principale (11), le système comportant en outre:
- une conduite, dite conduite de dérivation (12), montée en dérivation par rapport à un tronçon prédéfini (111) de la conduite principale (11),
- un premier circuit fermé (17) prévu pour contenir un premier fluide caloporteur,
- un premier circulateur (107) prévu pour mettre en circulation le premier fluide caloporteur dans le premier circuit fermé,
- un premier échangeur thermique (101) installé de façon à permettre un premier échange thermique entre le premier fluide caloporteur et le dihydrogène (1001) circulant dans la conduite de dérivation (12), le système étant **caractérisé en ce qu'**il comprend
- un deuxième échangeur thermique (102) installé de façon à permettre au moins un deuxième échange thermique, dit échange thermique secondaire, chaque échange thermique secondaire étant effectué entre le premier fluide caloporteur et un fluide utilisé dans l'aéronef et nécessitant d'être refroidi, dit fluide utile.

11. Système (100) selon la revendication précédente, dans lequel le premier circulateur (107) correspond à une pompe.

12. Système (100) selon l'une des revendications 10 et 11, comportant en outre :
- un second circuit fermé (18) prévu pour contenir un second fluide caloporteur,
- un second circulateur (108) prévu pour mettre en circulation le second fluide caloporteur dans le second circuit fermé,
- un troisième échangeur thermique (103) installé de façon à permettre un troisième échange thermique entre le second fluide caloporteur et le dihydrogène (1001) circulant dans une partie de la conduite principale (11),
- un quatrième échangeur thermique (104) installé de façon à permettre un quatrième échange thermique entre le second fluide caloporteur et un gaz d'échappement issu d'une turbine (143) du moteur (14).

13. Système (100) selon la revendication précédente, dans lequel le second circulateur (108) correspond à une pompe.

14. Aéronef (1) comportant au moins un système (100) selon l'une quelconque des revendications 10 à 13.

## Patentansprüche

1. Verfahren zur kombinierten Kühlung und Erwärmung in einem Flugzeug (1), wobei das Flugzeug ein Triebwerk (14) umfasst, das dazu ausgestaltet ist, Diwasserstoff (1001) als Treibstoff zu verwenden, wobei der Diwasserstoff (1001) in flüssiger Form in einem Tank (13) gespeichert wird und in dem Triebwerk (14) in gasförmiger Form verwendet wird, wobei das Triebwerk (14) ein Turboproptriebwerk ist, wobei der Diwasserstoff (1001) von dem Tank (13) bis zu dem Triebwerk (14) über eine Leitung, Hauptleitung (11) genannt, befördert wird, wobei das Verfahren ferner die Schritte umfasst:
- Abzweigen, parallel zu einem vorgegebenen Abschnitt (111) der Hauptleitung (11), eines Teils des Stroms aus Diwasserstoff (1001) in eine Abzweigleitung (12) genannte Leitung,
- Umwälzen, in einem ersten geschlossenen Kreislauf (17), eines ersten Wärmeträgerfluids,
- Durchführen eines ersten Wärmeaustausches zwischen dem ersten Wärmeträgerfluid und dem Diwasserstoff (1001), der in der Abzweigleitung (12) zirkuliert, wobei das Verfahren **dadurch gekennzeichnet ist, dass** es den Schritt des Durchführens mindestens eines zweiten Wärmeaustausches, sekundärer Wärmeaustausch genannt, umfasst, wobei jeder sekundäre Wärmeaustausch zwischen dem ersten Wärmeträgerfluid und einem Fluid, das in dem Flugzeug verwendet wird, und gekühlt werden muss, Nutzfluid genannt, durchgeführt wird.

2. Verfahren nach Anspruch 1, umfassend ferner die Schritte:
- Umwälzen, in einem zweiten geschlossenen Kreislauf (18), eines zweiten Wärmeträgerfluids,
- Durchführen eines dritten Wärmeaustausches zwischen dem zweiten Wärmeträgerfluid und dem Diwasserstoff (1001), der in einem Teil der Hauptleitung (11) zirkuliert, und
- Durchführen eines vierten Wärmeaustausches zwischen dem zweiten Wärmeträgerfluid und einem Abgas, das aus einer Turbine (143) des Triebwerks (14) stammt.

3. Verfahren nach Anspruch 2, wobei der dritte Wärmeaustausch stromab des vorgegebenen Abschnitts (111) der Hauptleitung (11) durchgeführt wird.

4. Verfahren nach Anspruch 2, wobei der dritte Wärmeaustausch stromauf des vorgegebenen Abschnitts (111) der Hauptleitung (11) durchgeführt wird.

5. Verfahren nach einem der Ansprüche 1 bis 4, wobei das erste Wärmeträgerfluid einen Betriebstemperaturbereich umfasst, der enger als der Betriebstemperaturbereich des zweiten Wärmeträgerfluids ist.

6. Verfahren nach einem der Ansprüche 1 bis 5, wobei das Nutzfluid Öl ist oder Druckluft, die aus dem Triebwerk stammt und dazu bestimmt ist, in einem Klimatisierungssystem des Flugzeugs verwendet zu werden.

7. Verfahren nach einem der Ansprüche 1 bis 5, umfassend einen ersten sekundären Wärmeaustausch zwischen dem ersten Wärmeträgerfluid und einem ersten Nutzfluid und einen zweiten sekundären Wärmeaustausch zwischen dem ersten Wärmeträgerfluid und einem zweiten Nutzfluid, wobei das erste Nutzfluid Öl ist und wobei das zweite Nutzfluid Druckluft ist, die aus dem Triebwerk stammt und dazu bestimmt ist, in einem Klimatisierungssystem des Flugzeugs verwendet zu werden.

8. Verfahren nach einem der Ansprüche 1 bis 7, umfassend ferner das Durchführen einer Regelung des Stroms aus Diwasserstoff (1001), der in der Abzweigleitung (12) zirkuliert, gemäß einer Temperatur des Nutzfluids, die im Ausgang des sekundären Wärmeaustausches gemessen wird, den das Nutzfluid durchläuft.

9. Verfahren nach einem der Ansprüche 1 bis 8, umfassend ferner das Durchführen einer Regelung des Stroms aus Diwasserstoff (1001), der in der Abzweigleitung (12) zirkuliert, gemäß einer Temperatur des ersten Wärmeträgerfluids, die im Eingang des ersten Wärmeaustausches gemessen wird.

10. System (100) zur kombinierten Kühlung und Erwärmung in einem Flugzeug (1), wobei das Flugzeug ein Triebwerk (14) umfasst, das Diwasserstoff (1001) als Treibstoff verwendet, wobei der Diwasserstoff (1001) in flüssiger Form in einem Tank (13) gespeichert wird und in dem Triebwerk (14) in gasförmiger Form verwendet wird, wobei das Triebwerk (14) ein Turboproptriebwerk ist, wobei der Diwasserstoff (1001) von dem Tank (13) bis zu dem Triebwerk (14) über eine Leitung, Hauptleitung (11) genannt, befördert wird, wobei das System ferner umfasst:
- eine Leitung, Abzweigleitung (12) genannt, die in Abzweigung in Bezug auf einen vorgegebenen Abschnitt (111) der Hauptleitung (11) montiert ist,
- einen ersten geschlossenen Kreislauf (17), der dazu vorgesehen ist, ein erstes Wärmeträgerfluid zu enthalten,
- einen ersten Zirkulator (107), der dazu vorgesehen ist, das erste Wärmeträgerfluid in dem ersten geschlossenen Kreislauf umzuwälzen,
- einen ersten Wärmetauscher (101), der so installiert ist, dass er einen ersten Wärmeaustausch zwischen dem ersten Wärmeträgerfluid und dem Diwasserstoff (1001), der in der Abzweigleitung (12) zirkuliert, ermöglicht, wobei das System **dadurch gekennzeichnet ist, dass** es umfasst
- einen zweiten Wärmetauscher (102), der so installiert ist, dass er mindestens einen zweiten Wärmeaustausch, sekundärer Wärmeaustausch genannt, ermöglicht, wobei jeder sekundäre Wärmeaustausch zwischen dem ersten Wärmeträgerfluid und einem Fluid, das in dem Flugzeug verwendet wird und gekühlt werden muss, Nutzfluid genannt, durchgeführt wird.

11. System (100) nach dem vorhergehenden Anspruch, wobei der erste Zirkulator (107) einer Pumpe entspricht.

12. System (100) nach einem der Ansprüche 10 und 11, umfassend ferner:
- einen zweiten geschlossenen Kreislauf (18), der dazu vorgesehen ist, ein zweites Wärmeträgerfluid zu enthalten,
- einen zweiten Zirkulator (108), der dazu vorgesehen ist, das zweite Wärmeträgerfluid in dem zweiten geschlossenen Kreislauf umzuwälzen,
- einen dritten Wärmetauscher (103), der so installiert ist, dass er einen dritten Wärmeaustausch zwischen dem zweiten Wärmeträgerfluid und dem Diwasserstoff (1001), der in einem Teil der Hauptleitung (11) zirkuliert, ermöglicht,
- einen vierten Wärmetauscher (104), der so installiert ist, dass er einen vierten Wärmeaustausch zwischen dem zweiten Wärmeträgerfluid und einem Abgas, das aus einer Turbine (143) des Triebwerks (14) stammt, ermöglicht.

13. System (100) nach dem vorhergehenden Anspruch, wobei der zweite Zirkulator (108) einer Pumpe entspricht.

14. Flugzeug (1), das mindestens ein System (100) nach einem der Ansprüche 10 bis 13 umfasst.

## Claims

1. Method for combined cooling and heating in an aircraft (1), the aircraft comprising an engine (14) configured to use dihydrogen (1001) as fuel, the dihydrogen (1001) being stored in liquid form in a tank (13) and being used in gaseous form in the engine (14), the engine (14) being a turboprop engine, the dihydrogen (1001) being conveyed from the tank (13) to the engine (14) via a pipe referred to as main pipe (11), the method additionally comprising the following steps:
- branching off, parallel to a predefined section (111) of the main pipe (11), one portion of the flow of dihydrogen (1001) into a pipe referred to as bypass pipe (12),
- circulating a first heat-transfer fluid in a first closed circuit (17),
- bringing about a first exchange of heat between the first heat-transfer fluid and the dihydrogen (1001) circulating in the bypass pipe (12), the method being **characterized in that** it comprises the step of bringing about at least one second exchange of heat, referred to as secondary exchange of heat, each secondary exchange of heat being brought about between the first heat-transfer fluid and a fluid that is used in the aircraft and needs to be cooled, referred to as working fluid.

2. Method according to Claim 1, additionally comprising the following steps:
- circulating a second heat-transfer fluid in a second closed circuit (18),
- bringing about a third exchange of heat between the second heat-transfer fluid and the dihydrogen (1001) circulating in one portion of the main pipe (11), and
- bringing about a fourth exchange of heat between the second heat transfer fluid and an exhaust gas coming from a turbine (143) of the engine (14).

3. Method according to Claim 2, wherein the third exchange of heat is brought about downstream of the predefined section (111) of the main pipe (11).

4. Method according to Claim 2, wherein the third exchange of heat is brought about upstream of the predefined section (111) of the main pipe (11).

5. Method according to one of Claims 1 to 4, wherein the first heat-transfer fluid has an operating temperature range narrower than the operating temperature range of the second heat-transfer fluid.

6. Method according to one of Claims 1 to 5, wherein the working fluid is oil or compressed air coming from the engine and intended for use in an air-conditioning system of the aircraft.

7. Method according to one of Claims 1 to 5, comprising a first secondary exchange of heat between the first heat-transfer fluid and a first working fluid and a second secondary exchange of heat between the first heat-transfer fluid and a second working fluid, the first working fluid being oil and the second working fluid being compressed air coming from the engine and intended for use in an air-conditioning system of the aircraft.

8. Method according to one of Claims 1 to 7, additionally comprising regulating the flow of dihydrogen (1001) circulating in the bypass pipe (12) depending on a temperature of the working fluid measured as it leaves the secondary exchange of heat via which said working fluid passes.

9. Method according to one of Claims 1 to 8, additionally comprising regulating the flow of dihydrogen (1001) circulating in the bypass pipe (12) depending on a temperature of the first heat-transfer fluid measured as it enters into the first exchange of heat.

10. System (100) for combined cooling and heating in an aircraft (1), the aircraft comprising an engine (14) using dihydrogen (1001) as fuel, the dihydrogen (1001) being stored in liquid form in a tank (13) and being used in gaseous form in the engine (14), the engine (14) being a turboprop engine, the dihydrogen (1001) being conveyed from the tank (13) to the engine (14) via a pipe referred to as main pipe (11), the system additionally comprising:
- a pipe, referred to as bypass pipe (12), which branches off from a predefined section (111) of the main pipe (11),
- a first closed circuit (17) provided to contain a first heat-transfer fluid,
- a first circulator (107) provided to circulate the first heat transfer fluid in the first closed circuit,
- a first heat exchanger (101) installed so as to allow a first exchange of heat between the first heat-transfer fluid and the dihydrogen (1001) circulating in the bypass pipe (12), the system being **characterized in that** it comprises
- a second heat exchanger (102) installed so as to allow at least one second exchange of heat, referred to as secondary exchange of heat, each secondary exchange of heat being brought about between the first heat-transfer fluid and a fluid that is used in the aircraft and needs to be cooled, referred to as working fluid.

11. System (100) according to the preceding claim, wherein the first circulator (107) corresponds to a pump.

12. System (100) according to either of Claims 10 and 11, additionally comprising:
- a second closed circuit (18) provided to contain a second heat-transfer fluid,
- a second circulator (108) provided to circulate the second heat transfer fluid in the second closed circuit,
- a third heat exchanger (103) installed so as to allow a third exchange of heat between the second heat-transfer fluid and the dihydrogen (1001) circulating in one portion of the main pipe (11),
- a fourth heat exchanger (104) installed so as to allow a fourth exchange of heat between the second heat transfer fluid and an exhaust gas coming from a turbine (143) of the engine (14).

13. System (100) according to the preceding claim, wherein the second circulator (108) corresponds to a pump.

14. Aircraft (1) comprising at least one system (100) according to any one of Claims 10 to 13.
